# EUROPEAN PATENT SPECIFICATION

(11) **EP 2 596 896 B1**
(45) Date of publication and mention of the grant of the patent: **17.01.2018**
(21) Application number: 12193860.9
(22) Date of filing: 22.11.2012
(51) Int. Cl.: B23K 9/025, B23K 9/167, B23K 9/173, B23K 26/26, B23K 28/02, B23K 26/14

(54) **Welding system and process with a laser device, a GMAW device and a GTAW device**
Schweißsystem und -prozess mit Laser-, MSg- und WIGeinrichtungen
Système et procédé de soudage avec un dispositif laser, un dispositif MIG/MAG et un dispositif TIG

(30) Priority: 28.11.2011 US 201113304969
(43) Date of publication of application: 29.05.2013
(73) Proprietor: General Electric Company, Schenectady, NY 12345 (US)
(72) Inventor: Lin, Dechao, Greenville, SC South Carolina 29615 (US); Schick, David Edward, Greenville, SC South Carolina 29615 (US); Kottilingam, Srikanth Chandrudu, Greenville, SC South Carolina 29615 (US); Cui, Yan, Greenville, SC South Carolina 29615 (US); Tollison, Brian Lee, Greenville, SC South Carolina 29615 (US)
(74) Representative: Foster, Christopher Michael

(56) References cited:
- EP-A1- 2 295 189
- EP-A1- 2 404 695
- JP-A- 2003 001 453
- JP-A- 2011 062 737
- US-B1- 6 469 277

## Description

### FIELD OF THE INVENTION

The present invention is directed to welding systems, welding processes, and welded articles. More specifically, the present invention is directed to a welding system and a welding process according to the preamble of claims 1 and 5 respectively (see, for example, US6469277), for welding with three or more types of welding apparatuses.

### BACKGROUND OF THE INVENTION

Welding is a continuously developing technology. The demand on properties of articles formed by welding and/or repaired by welding is continuously increasing. Products are consistently subjected to higher temperatures, harsher applications, and more corrosive environments. Known techniques attempt to address these demands but are not able to adequately meet them.

One known welding processes use gas metal arc welding (GMAW). Gas metal arc welders can make a weld deposition on the joint but with a shallow penetration. In addition, spatter happens due to the metal transfer from the consumable electrode to the molten pool under the arc on the substrate. To remove the spatter, additional finishing techniques are used. Such techniques add costs to the overall process and can result in inconsistent welding.

Another known welding process uses laser welding. Laser welding can make deeper penetration welds because of its high-energy density. However, the small size of the laser beam limits the joint fit-up and can be undesirably lacking in fusion due to inconsistent or undesirably low power limitations.

Another known welding process uses gas tungsten arc welding (GTAW). Gas tungsten arc welders use an arc energy established between a non-consumable electrode and the substrate. Filler metal may apply in the welding application. There is no spatter in a GTAW process with appropriate settings. However, the GTAW process has a slow travel speed that limits productivity.

A recent developed welding process combines a laser welding with a gas metal arc welding. When the two welding process are used together, such welding processes are known as hybrid welding processes. Hybrid welding processes produce welds having several positive attributes. Such welds can reduce the cost in joint preparation, speed up the welding process, reduce the rework, and produce higher quality welds. However, further improvement is still desirable. For example, hybrid welding processes can produce spatter, can involve labor or operational costs, can involve laser energy loss due to spatter reflection, and can have weld quality concerns in some applications. In addition, spatter may disturb the laser keyhole stability.

JP 2003001453 describes a welding process wherein butt members are first melted by a nonconsumable electrode arc to fill a spacing of the butt members with molten metal and then, the deep layers of the butt members are melt joined by irradiating these layers with a laser beam from above the molten metal of the spacing position. Finally, the recess of the surfaces generated by melting of the butt members is supplemented with molten metal of an electrode rod by a consumable electrode arc. EP 2 295 189 A1 discloses a system and method of dual laser beam welding of two adjacent superalloy components. Two lasers or a laser and coupled beam splitter supply first and second laser beams, which focal points are separated by a predetermined distance. The first laser beam is used to form a base weld with a first filler metal between the components and the second laser beam is used to form a cap weld with a second filler metal on top of the base weld.

US 6469277 describes hybrid welding using a combination of laser beam welding with gas-shielded welding by electric arc in which at least two electrodes are used. The electrodes can be flooded by a common shielding gas curtain, or separately, or in groups. A welding system, and a welding process not suffering from one or more of the above drawbacks would be desirable in the art.

### BRIEF DESCRIPTION OF THE INVENTION

The invention resides in a welding system and in a welding process as defined in claims 1 and 5 respectively. Further embodiments of the present invention are defined in the appended claims. Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

Embodiments of the present invention will now be described, by way of example only, with reference to the accompanying drawings in which:
FIG. 1 is a side view of a welding system.
FIG. 2 is a top view of a welded article with a hybrid laser weld on a first portion, a tribrid laser weld on a second portion, and a GTAW weld on a third portion.
FIG. 3 is a section view along line 3-3 of FIG. 2 of a weld formed by a GTAW process.
FIG. 4 is a section view along line 4-4 of FIG. 2 of a weld formed by a hybrid laser/GMAW process.
FIG. 5 is a section view along line 5-5 of FIG. 2 of a weld formed by a tribrid GTAW/laser/GMAW process. Wherever possible, the same reference numbers will be used throughout the drawings to represent the same parts.

### DETAILED DESCRIPTION OF THE INVENTION

Provided is a welding system, and a welding process. Embodiments of the present disclosure decrease spatter, decrease rework, reduce or eliminate unnecessary labor, reduce costs, increase weld quality, or combinations thereof.

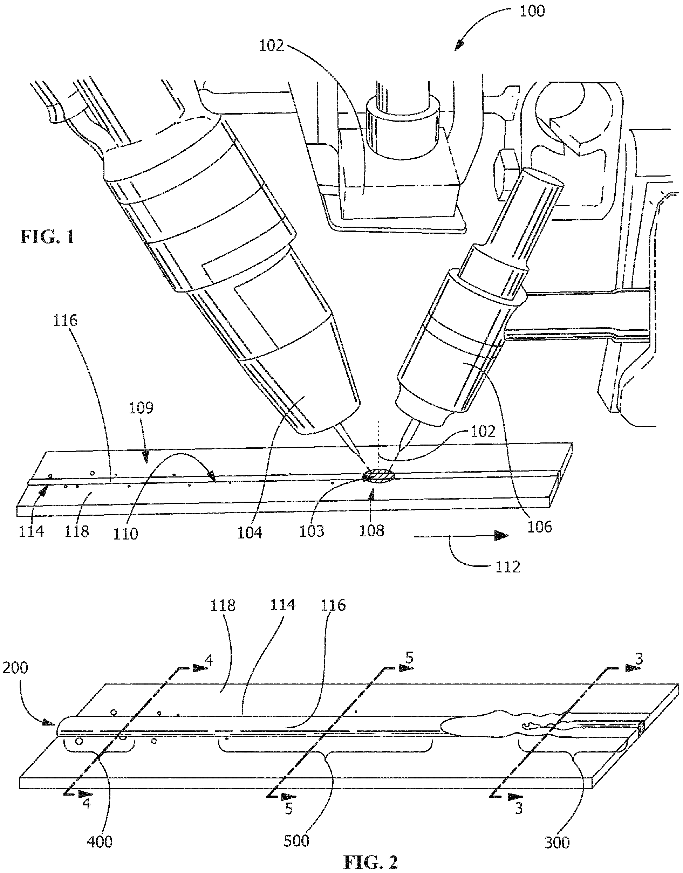

Referring to FIG. 1, a welding system 100 includes a laser welding apparatus 102, a gas metal arc welding (GMAW) apparatus 104, and a gas tungsten arc (GTAW) welding apparatus 106 for welding a first workpiece 108 along a weld path 110 to a second workpiece 109 to form a weld along the welding direction 112. The welding process includes welding the first workpiece 108 and the second workpiece 109 with the laser welding apparatus 102, the GMAW apparatus 104, and the GTAW apparatus 106.

The system 100 is arranged such that the weld path 112 includes welding from the GMAW apparatus 104 first, welding from the laser welding apparatus 102 second, and welding from the GTAW apparatus 106 third. three heating sources (such as the laser welding apparatus 102, the GMAW apparatus 104, and the GTAW apparatus 106) share a common molten pool 103. As used herein the term "common molten pool" refers to a molten pool combing two or more molten pools together (for example, a laser molten pool, a GMAW molten pool, and a GTAW molten pool). According to the present invention, then GMAW apparatus 104 and the laser welding apparatus 102 are placed close enough (0-15 mm) to form a hybrid laser/GMAW, while the GTAW apparatus 106 is positioned to remelt a portion of the solidifying weld to reduce the weld cooling rate to avoid the weld defect formation and to smoothen the weld bead surface. The system 100 is arranged to reduce or eliminate interference or disturbance between two electric arcs. For example, in one embodiment, the relative position of the GMAW apparatus 104 and the laser welding apparatus 102 is adjustable and/or the relative position of the laser welding apparatus 102 and the GTAW apparatus 106 is adjustable. With the GMAW apparatus 104 positioned first, the laser welding apparatus 102 operates with the GMAW apparatus 104 second to form a hybrid laser/GMAW to stabilize the GMAW arc. The positioning between the GMAW apparatus 104 and the laser apparatus 102 and/or the laser welding apparatus 102 and the GTAW apparatus 106 is adjustable. In another embodiment, the laser welding apparatus 102 in the system 100 uses a laser, for example, splitting a single laser beam into two laser beams. In another embodiment, the system 100 includes a second laser welding apparatus 102 for providing a second laser beam. In these embodiments, one laser beam works with GMAW to form a hybrid laser/GMAW, and another laser beam works with GTAW to form a hybrid laser/GTAW. The GTAW apparatus 106, the GMAW apparatus 104, and the two laser beams apparatus 102 share the common molten pool 103. The positioning of each within the system reduces or eliminates interference or disturbance between two electric arcs. In one embodiment, the GMAW apparatus 104 and the laser welding apparatus 102 adjustable (for example, between about 0 mm and about 15 mm), the laser welding apparatus 102 and the GTAW apparatus 106 are adjustable (for example, between about 0 mm and about 15 mm) based upon the desired application. Additionally or alternatively, in one embodiment, a distance between two lasers and/or the two laser beams is adjustable (for example, between about 0 mm and about 10 mm).

The welding is performed along the weld path 110 at any suitable speed. For example, in one embodiment, the welding speed is about 1.52 m/min (60 inches per minute (ipm)). In other embodiments, the welding speed is between about 0.76 m/min (30 ipm) and about 3.05 m/min (120 ipm), between about 1.40 m/min (55 ipm) and about 2.54 m/min (100 ipm), between about 1.40 m/min (55 ipm) and about 1.78 m/min (70 ipm), between about 1.52 m/min (60 ipm) and about 38,1 mm/s (90 ipm), about 0.76 m/min (30 ipm), about 1.40 m/min (55 ipm), about 1.52 m/min (60 ipm), about 2.54 m/min (100 ipm), about 3.05 m/min (120 ipm), or any suitable combination or sub-combination thereof.

In one embodiment, the laser welding apparatus 102 operates within predetermined operational parameters, which is based upon the desired application. For example, in one embodiment, the laser operates at a power of about 2.5 kW. In other embodiments, the laser operates at a power of between about 2.0 kW and about 20.0 kW, between about 2.0 kW and about 8.0 kW, between about 2.5 kW and about 6.0 kW, a power of about 2.0 kW, a power of about 10.0 kW, a power of about 20.0 kW, or any suitable combination or sub-combination thereof.

In one embodiment, the GMAW apparatus 104 operates within predetermined operational parameters. For example, in one embodiment, the GMAW apparatus 104 operates at about 200A of arc current and 26V of arc voltage, using a pulse or continuous direct mode. In other embodiments, the GMAW apparatus 104 operates between about 100A of arc current and about 500A, between about 150A and about 450A, between about 200A and about 400A, between about 300A and about 500A, or any suitable combination or sub-combination thereof. In one embodiment, the voltage is between about 15V and about 35V. In one embodiment, the arc current is a continuous wave current or a pulsed wave, depending upon the desired application.

In one embodiment, the GTAW apparatus 106 operates within predetermined operational parameters. For example, in one embodiment, the GTAW apparatus 106 operates at about 180A of arc current and 18v of arc voltage. In other embodiments, the GTAW apparatus 106 operates between 30A and 500A. In one embodiment, the GTAW apparatus 106 burns or otherwise removes dirt and oxides from the first workpiece 108 and the second workpiece 109, thereby permitting formation of a higher quality weld in comparison to welds formed without the GTAW apparatus 106. In one embodiment, heat applied from the GTAW apparatus 106 increases the flow characteristics of molten metal used in the welding process, thereby rendering a transition region 114 between a weld center 116 and the base 118 of the first workpiece 108 (see FIGS. 1 and 2) smoother in comparison to welds formed without the GTAW apparatus 106. In another embodiment, heat from the GTAW apparatus 106 decreases the cooling rate of the weld pool so as to prevent weld defect formation. GTAW generates a molten pool, which provides the trailing GMAW a larger cathode base for GMAW metal transfer so as to reduce or eliminate GMAW spattering. GTAW generates a molten pool, which reduces the temperature gradient once the laser penetrates through so as to reduce the tendency of defect formation. According to the present invention, the GMAW apparatus 104 is arranged and positioned to interact with the laser welding apparatus 102. In this case, a cathode at GMAW setting is established on the base 118 of the first workpiece 108 and the second workpiece 109, and interacts with the laser beam of the laser welding apparatus 102. In this case, the molten pool 103, generated by GTAW, combines to the common molten pool and reduces or eliminates spattering of GMAW because the metal transfer from the electrode in the GMAW apparatus 104 is more stable in comparison to welds formed without the GTAW assistance.

Referring to FIG. 2, a welded article 200 is formed by using the system 100 with various settings. Specifically, the welded article 200 is welded by the GMAW apparatus 104 (see FIG. 1), the laser welding apparatus 102 (see FIG. 1), and the GTAW apparatus 106 (see FIG. 1). The welded article 200 includes one or more regions having predetermined weld characteristics based upon the selected apparatuses used in welding. As will be appreciated, the welding processes include transitioning from operation with one or more of the GTAW apparatus 106, the laser welding apparatus 102, and the GMAW apparatus 104 to form the regions having differing weld characteristics. According to the present invention, spatter is reduced or eliminated by applying a GTAW to the hybrid laser/GMAW setting.

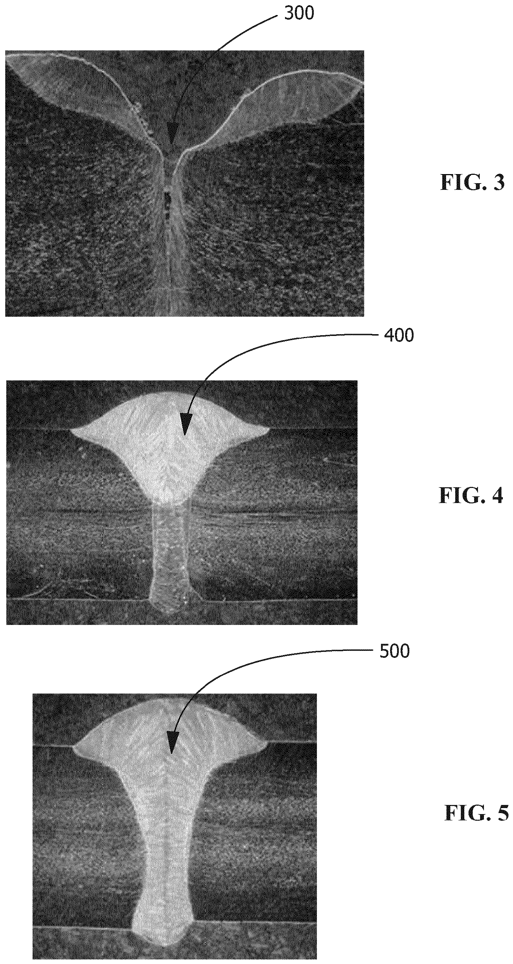

Referring to FIG. 3, the welded article 200 includes a GTAW welded region 300 (see FIG. 2) formed by using the GTAW apparatus 106 (see FIG. 1). In one case, the GTAW welded region 300 is formed by the system 100 (see FIG. 1). In this case, the GTAW apparatus 106 is used but the laser welding apparatus 102 and the GMAW apparatus 104 are not used, in which to demonstrate the contribution of GTAW in the tribrid GTAW/Laser/GMAW welds.

Referring to FIG. 4 the welded article 200 includes a hybrid welded region 400 (see FIG. 2) formed by using the laser welding apparatus 102 (see FIG. 1) and the GMAW apparatus 104 (see FIG. 1). In this case, the laser welding apparatus 102 and the GMAW apparatus 104 are used and positioned at a predetermined distance apart to form a hybrid laser/GMAW (for example, in one case, the predetermined distance is between about 0 mm and about 15 mm) but the GTAW apparatus 106 is not used.

Referring to FIG. 5, the welded article 200 includes a tribrid welded region 500 (see FIG. 2) formed by using the laser welding apparatus 102 (see FIG. 1), the GMAW apparatus 104 (see FIG. 1), and the GTAW apparatus 106 (see FIG. 1). As can be seen in FIG. 5, the profile of the weld in the tribrid welded region 500 (see FIG. 2) is cleaner than the weld in the hybrid welded region 400 (see FIG. 2) in FIG. 4. Under an identical hybrid/GMAW setting, additional GTAW reduces or eliminates a lack of fusion defect attributable present without the additional GTAW due to the weld profile modification. In addition, the weld in the tribrid welded region 500 (see FIG. 2) is substantially consistent and substantially uniform in microstructure.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A welding system (100), comprising:
a laser welding apparatus (102);
a gas metal arc welding apparatus (104); and **characterised by** a gas tungsten arc welding apparatus (106); and wherein the laser welding apparatus (102), the gas metal arc welding apparatus (104), and the gas tungsten arc welding apparatus (106) produce a combined molten pool to weld an article (108) along a weld path (112); and further **characterised in that**
the system (100) is arranged such that the weld path (112) includes welding from the gas metal arc welding apparatus (104) first, welding from the laser welding apparatus (102) second and welding from the gas tungsten arc welding apparatus (106) third, wherein the gas metal arc welding apparatus (104) is positioned first and the gas metal arc welding apparatus (104) and the laser welding apparatus (102) are close enough, i.e. from 0 to 15 mm, to form a hybrid laser/gas metal arc welding and wherein the gas tungsten arc welding apparatus (106) is positioned to remelt a portion of the solidifying weld.

2. The system of claim 1, wherein the laser welding apparatus (102) forms a split laser beam.

3. The system of any of claims 1 to 2, wherein the laser welding apparatus (102) includes a first laser and a second laser, the first laser providing a first laser beam and the second laser providing a second laser beam.

4. The system of any preceding claim, wherein a first laser beam operates with the gas metal arc welding apparatus (104) to form a first hybrid welding apparatus and a second laser beam operates with the gas tungsten arc welding apparatus (106) to form the second hybrid welding apparatus.

5. A welding process, comprising:
providing a welding system (100), the welding system comprising a laser welding apparatus (102), a gas metal arc welding apparatus (104), and a gas tungsten arc welding apparatus (106), the laser apparatus, the gas metal arc welding apparatus and the gas tungsten arc welding apparatus using a combined molten pool during the welding process;
**characterized in that**
the welding includes welding from the gas metal arc welding apparatus (104) first, welding from the laser welding apparatus (102) second and welding from the gas tungsten arc welding apparatus (106) third, wherein the gas metal arc welding apparatus (104) and the laser welding apparatus (102) are close enough, i.e. from 0 to 15 mm, to form a hybrid laser/gas metal arc welding and wherein the gas tungsten arc welding apparatus (106) is positioned to remelt a portion of the solidifying weld.

## Patentansprüche

1. Schweißsystem (100), umfassend:
ein Laserschweißgerät (102);
ein Metall-Schutzgasschweißgerät (104); und **gekennzeichnet durch** ein Wolfram-Inertgasschweißgerät (106); und wobei das Laserschweißgerät (102), das Metall-Schutzgasschweißgerät (104) und das Wolfram-Inertgasschweißgerät (106) ein kombiniertes Schmelzbad zum Schweißen eines Artikels (108) entlang eines Schweißwegs (112) erzeugen;
und ferner **dadurch gekennzeichnet, dass** das System (100) derart angeordnet ist, dass der Schweißweg (112) als erstes das Schweißen vom Metall-Schutzgasschweißgerät (104), als zweites das Schweißen vom Laserschweißgerät (102) und als drittes das Schweißen vom Wolfram-Inertgasschweißgerät (106) umfasst, wobei das Metall-Schutzgasschweißgerät (104) zuerst platziert wird und das Metall-Schutzgasschweißgerät (104) und das Laserschweißgerät (102) nahe genug ist, d.h. 0 bis 15 mm, um eine Laser-Metallschutzgas-Hybridschweißung zu bilden, und wobei das Wolfram-Inertgasschweißgerät (106) zum Wiederaufschmelzen eines Teils der sich verfestigenden Schweißung angeordnet ist.

2. System nach Anspruch 1, wobei das Laserschweißgerät (102) einen geteilten Laserstrahl bildet.

3. System nach einem der Ansprüche 1 bis 2, wobei das Laserschweißgerät (102) einen ersten Laser und einen zweiten Laser aufweist, wobei der erste Laser einen ersten Laserstrahl bereitstellt und der zweite Laser einen zweiten Laserstrahl bereitstellt.

4. System nach einem der vorhergehenden Ansprüche, wobei ein erster Laserstrahl mit dem Metall-Schutzgasschweißgerät (104) zur Bildung eines ersten Hybrid-Schweißgeräts arbeitet und ein zweiter Laserstrahl mit dem Wolfram-Inertgasschweißgerät (106) zur Bildung des zweiten Hybrid-Laserschweißgeräts arbeitet.

5. Schweißverfahren, umfassend:
Bereitstellen eines Schweißsystems (100), wobei das Schweißsystem ein Laserschweißgerät (102), ein Metall-Schutzgasschweißgerät (104) und ein Wolfram-Inertgasschweißgerät (106) umfasst, wobei das Lasergerät, das Metall-Schutzgasschweißgerät und das Wolfram-Inertgasschweißgerät ein kombiniertes Schmelzbad während des Schweißverfahrens verwenden; **dadurch gekennzeichnet, dass** die Schweißung als erstes das Schweißen vom Metall-Schutzgasschweißgerät (104), als zweites das Schweißen vom Laserschweißgerät (102) und als drittes das Schweißen vom Wolfram-Inertgasschweißgerät (106) umfasst, wobei das Metall-Schutzgasschweißgerät (104) und das Laserschweißgerät (102) nahe genug ist, d.h. 0 bis 15 mm, um eine Laser-Metallschutzgas-Hybridschweißung zu bilden, und wobei das Wolfram-Inertgasschweißgerät (106) zum Wiederaufschmelzen eines Teils der sich verfestigenden Schweißung angeordnet ist.

## Revendications

1. Système de soudage (100), comprenant :
un appareil de soudage laser (102) ;
un appareil de soudage à l'arc sous gaz avec fil plein (104) ; et **caractérisé par**
un appareil de soudage à l'arc sous gaz inerte avec électrode de tungstène (106) ; et
dans lequel l'appareil de soudage laser (102), l'appareil de soudage à l'arc sous gaz avec fil plein (104), et
l'appareil de soudage à l'arc sous gaz inerte avec électrode de tungstène (106) produisent un bain de fusion combiné pour souder un article (108) le long d'un chemin de soudure (112) ;
et **caractérisé en outre en ce que**
le système (100) est agencé de sorte que le chemin de soudure (112) comporte un soudage de l'appareil de soudage à l'arc sous gaz avec fil plein (104) en premier,
un soudage de l'appareil de soudage laser (102) en deuxième et un soudage de l'appareil de soudage à l'arc sous gaz inerte avec électrode de tungstène (106) en troisième, dans lequel l'appareil de soudage à l'arc sous gaz avec fil plein (104) est positionné en premier et
l'appareil de soudage à l'arc sous gaz avec fil plein (104) et l'appareil de soudage laser (102) sont assez proche, c'est-à-dire de 0 à 15 mm, pour former un soudage hybride à l'arc sous gaz avec fil plein/laser et
dans lequel l'appareil de soudage à l'arc sous gaz inerte avec électrode de tungstène (106) est positionné pour refondre une portion de la soudure en cours de solidification.

2. Système selon la revendication 1, dans lequel l'appareil de soudage laser (102) forme un faisceau laser divisé.

3. Système selon l'une quelconque des revendications 1 et 2, dans lequel l'appareil de soudage laser (102) comporte un premier laser et un second laser, le premier laser fournissant un premier faisceau laser et le second laser fournissant un second faisceau laser.

4. Système selon l'une quelconque des revendications précédentes, dans lequel un premier faisceau laser fonctionne avec l'appareil de soudage à l'arc sous gaz avec fil plein (104) pour former un premier appareil de soudage hybride et un second faisceau laser fonctionne avec l'appareil de soudage à l'arc sous gaz inerte avec électrode de tungstène (106) pour former le second appareil de soudage hybride.

5. Procédé de soudage, comprenant :
la fourniture d'un système de soudage (100), le système de soudage comprenant un appareil de soudage laser (102),
un appareil de soudage à l'arc sous gaz avec fil plein (104), et un appareil de soudage à l'arc sous gaz inerte avec électrode de tungstène (106), l'appareil laser, l'appareil de soudage à l'arc sous gaz avec fil plein et l'appareil de soudage à l'arc sous gaz inerte avec électrode de tungstène utilisant un bain de fusion combiné pendant le procédé de soudage ;
**caractérisé en ce que**
le soudage comporte un soudage de l'appareil de soudage à l'arc sous gaz avec fil plein (104) en premier, un soudage de l'appareil de soudage laser (102) en deuxième et un soudage de l'appareil de soudage à l'arc sous gaz inerte avec électrode de tungstène (106) en troisième, dans lequel l'appareil de soudage à l'arc sous gaz avec fil plein (104) et l'appareil de soudage laser (102) sont assez proche, c'est-à-dire de 0 à 15 mm, pour former un soudage hybride à l'arc sous gaz avec fil plein/laser et dans lequel l'appareil de soudage à l'arc sous gaz inerte avec électrode de tungstène (106) est positionné pour refondre une portion de la soudure en cours de solidification.
